# EUROPÄISCHE PATENTSCHRIFT

(11) **EP 4 722 662 B1**
(45) Veröffentlichungstag und Bekanntmachung des Hinweises auf die Patenterteilung: **23.09.2026**
(21) Anmeldenummer: 25206393.8
(22) Anmeldetag: 02.10.2025
(51) Int. Cl.: G01F 1/58, G01N 27/02, G01F 1/64, G01F 1/74, G01F 25/10

(54) **VERFAHREN ZUR ÜBERWACHUNG EINES VERBUNDMESSGERÄTS**
METHOD FOR MONITORING A COMPOSITE MEASURING DEVICE
PROCÉDÉ DE SURVEILLANCE D'UN APPAREIL DE MESURE COMPOSITE

(30) Priorität: 04.10.2024 DE 102024128730
(43) Veröffentlichungstag der Anmeldung: 08.04.2026
(73) Patentinhaber: Krohne Messtechnik GmbH, 47058 Duisburg (DE)
(72) Erfinder: Förster, Jan, 45149 Essen (DE)
(74) Vertreter: Gesthuysen Patentanwälte

(56) Entgegenhaltungen:
- EP-B1- 4 155 687
- DE-A1- 102020 100 980
- XIANG DENG ET AL: "Theoretical study of vertical slug flow measurement by data fusion from electromagnetic flowmeter and electrical resistance tomography", FLOW MEASUREMENT AND INSTRUMENTATION, BUTTERWORTH-HEINEMANN, OXFORD, GB, vol. 22, no. 4, 15 March 2011 (2011-03-15), pages 272 - 278, XP028224069, ISSN: 0955-5986, [retrieved on 20110323], DOI: 10.1016/J.FLOWMEASINST.2011.03.007

## Beschreibung

Die Erfindung betrifft ein Verfahren zur Überwachung eines Verbundmessgeräts mit einem Durchflussmessgerät, einem Tomografiemessgerät und einem Messrohr, wobei das Messrohr einen Messrohrinnenraum aufweist. Im Messrohrinnenraum ist ein Medium. Der Stand der Technik ist durch EP 4 155 687 B1 gegeben.

Das Durchflussmessgerät weist zwei Durchflussmesselektroden im Messrohrinnenraum auf und ist zur Umsetzung eines magnetisch-induktiven Durchflussmessverfahrens ausgebildet. Bei Ausführung des Durchflussmessverfahrens wird eine Durchflussrate des Mediums durch den Messrohrinnenraum unter Verwendung von an den Durchflussmesselektroden anliegenden Durchflussmesssignalen bestimmt.

Das magnetisch-induktive Durchflussmessgerät weist auch eine Magnetfelderzeugungsvorrichtung zur Erzeugung eines Magnetfelds im Medium im Messrohrinnenraum und für gewöhnlich eine Steuerung auf. Ein Strömen des Mediums durch das Messrohr und damit auch durch den Messrohrinnenraum und das Magnetfeld induziert eine Spannung in das Medium, welche zum Durchflussmesssignal an den Durchflussmesselektroden beiträgt. Während der Ausführung des Durchflussmessverfahrens wird von der Steuerung unter Verwendung der Magnetfelderzeugungsvorrichtung das Magnetfeld erzeugt, das Durchflussmesssignal gemessen und unter Verwendung des Durchflussmesssignals die Durchflussrate des Mediums durch das Messrohr bestimmt. Oftmals ist das Magnetfeld ein geschaltetes Gleichmagnetfeld. Ein geschaltetes Gleichmagnetfeld ist ein Magnetfeld, welches mit einer Frequenz zwischen einer ersten magnetischen Sollfeldstärke und einer zweiten magnetischen Sollfeldstärke wechselt. Vorzugsweise haben die erste und die zweite Sollfeldstärke einen gleichen Betrag, aber entgegengesetzte Vorzeichen. Das Durchflussmesssignal wird dann sowohl bei der ersten als auch der zweiten Sollfeldstärke gemessen.

Das Tomografiemessgerät weist mindestens drei Tomografieelektroden im Messrohrinnenraum auf und ist zur Umsetzung eines elektrischen Impedanztomografie-Messverfahrens ausgebildet. Bei Ausführung des Impedanztomografie-Messverfahrens wird mindestens eine Eigenschaft des Mediums im Messrohrinnenraum unter Verwendung von an den Tomografieelektroden anliegenden Tomografiesignalen bestimmt.

Das Tomografiemessgerät weist ebenfalls für gewöhnlich eine Steuerung auf. Während der Ausführung des Impedanztomografie-Messverfahrens wird von der Steuerung nacheinander einzeln in jede der Tomografieelektroden ein Tomografieanregungssignal eingespeist und werden an den übrigen Tomografieelektroden die Tomografiesignale gemessen und wird unter Verwendung der Tomografiesignale die Eigenschaft des Mediums bestimmt.

Das Verbundmessgerät kann auch eine Steuerung aufweisen, welche die Steuerung des Durchflussmessgeräts und des Tomografiemessgeräts ergänzt oder diese Steuerungen ersetzt.

Das Messrohr weist sowohl die Durchflussmesselektroden als auch die Tomografieelektroden auf. Somit ist das Messrohr dem Durchflussmessgerät und dem Tomografiemessgerät gemein. Die in das Medium induzierten Spannung ist so klein, dass vorkommende externe elektrische Felder eine Spannung zwischen den Durchflussmesselektroden bewirken, welche ausreichend ist, das Durchflussmesssignal so weit zu beeinträchtigen, dass eine Qualität der bestimmten Durchflussrate deutlich schlechter ist. Deshalb weist das Messrohr für gewöhnlich eine Erdung auf, wodurch der Messrohrinnenraum gegen externe elektrische Felder geschützt ist. Jedoch bewirkt das elektrische Impedanztomografie-Messverfahren elektrische Felder im Messrohrinnenraum, gegen welche die Erdung nicht hilft. Diese internen elektrischen Felder bewirken Störspannungen zwischen den Durchflussmesselektroden, welche zum Durchflussmesssignal beitragen, wodurch eine Qualität der bestimmten Durchflussrate deutlich verschlechtert ist. Diese Störspannungen haben für gewöhnlich einen wesentlich größeren Betrag als die durch das Strömen des Mediums im Magnetfeld in das Medium induzierten Spannungen. Der abträgliche Effekt der Störspannungen ist jedoch für gewöhnlich durch eine Kalibrierung des Verbundmessgeräts kompensiert.

Solche Verbundmessgeräte kommen zum Beispiel zusammen mit Fördervorrichtungen, zum Beispiel auf Baggerschiffen, zum Einsatz. Eine solche Fördervorrichtung weist eine Fördersteuerung auf und fördert in einem Fördervorgang durch die Fördersteuerung gesteuert zum Beispiel ein mehrphasiges Medium, wobei das mehrphasige Medium eine flüssige und eine feste Phase aufweist und die feste Phase einen Bodenschatz enthält. Die feste Phase sind die Feststoffe des Mediums. Das mehrphasige Medium strömt während des Fördervorgang durch die Fördervorrichtung und durch das Messrohr.

Im Betrieb bestimmt das magnetisch-induktive Durchflussmessgerät durch Ausführung des Durchflussmessverfahrens eine Durchflussrate des Mediums durch den Messrohrinnenraum und bestimmt das Tomografiemessgerät durch Ausführung des Impedanztomografie-Messverfahrens die Eigenschaft des Mediums im Messrohrinnenraum, zum Beispiel einen Anteil der Feststoffe am Medium.

Die Fördersteuerung optimiert den Fördervorgang dann unter Verwendung der Durchflussrate und des Anteils der Feststoffe am Medium. Dazu gehört ein Einstellen einer Fördergeschwindigkeit, sodass einerseits Sedimentation und andererseits Abrasion in der Fördervorrichtung und im Verbundmessgerät möglichst gering sind. Abrasion beschädigt insbesondere auch die Tomografieelektroden. Sedimentation tritt bei einer zu geringen Fördergeschwindigkeit und bei einem zu hohen Anteil der Feststoffe am Medium auf und Abrasion tritt bei einer zu hohen Fördergeschwindigkeit durch die Feststoffe auf.

Weder Ultraschall- noch Coriolisdurchflussmessgeräte sind hier eine geeignete Alternative zum magnetisch-induktiven Durchflussmessgerät. Ultraschalldurchflussmessgeräte sind aufgrund der Feststoffe keine Alternative. Coriolisdurchflussmessgeräte sind aufgrund der notwendigen Ausgestaltung der Messrohre und der hohen Kosten keine Alternative.

Radiometrische Tomografiemessgeräte sind hier keine Alternative zum beschriebenen Tomografiemessgerät. Denn deren radioaktive Strahlung hat erhebliche Nachteile hinsichtlich Gefahrenpotenzial, Kosten, Entsorgung und Schulungen.

Aber auch das Verbundmessgerät mit dem magnetisch-induktiven Durchflussmessgerät, dem beschriebenen Tomografiemessgerät und dem gemeinsamen Messrohr weist Nachteile auf. Im Betrieb des Verbundmessgeräts treten Beschädigungen insbesondere auch der Tomografieelektroden auf. Beschädigungen sind zum Beispiel Verschleiß durch das durch den Messrohrinnenraum strömende Medium. Insbesondere können einzeln Tomografieelektroden durch Feststoffe im Medium beschädigt werden. Diese Beschädigungen beeinträchtigen natürlich unmittelbar eine Qualität der mindestens einen bestimmten Eigenschaft und oftmals, insbesondere wenn sie in Bezug auf eine Längsachse des Messrohrs nicht rotationssymmetrisch sind, auch eine Qualität der bestimmten Durchflussrate. Denn es ist erkannt worden, dass sich durch Beschädigungen der Tomografieelektroden die Störspannungen verändern, welche zum Durchflussmesssignal beitragen. Für gewöhnlich ist die Beeinträchtigung durch eine erneute Kalibrierung kompensierbar. Zunächst ist eine Beschädigung jedoch zu erkennen.

Aufgabe der vorliegenden Erfindung ist daher die Angabe eines Verfahrens zur Überwachung eines solchen Verbundmessgeräts, welches Beschädigungen der Tomografieelektroden erkennt.

Die Aufgabe ist durch ein Verfahren mit den folgenden Schritten gelöst:
In einem Schritt des Verfahrens wird ein Medium in den Messrohrinnenraum gebracht. Das Medium steht im Messrohrinnenraum entweder still oder strömt durch diesen.

In einem weiteren Schritt wird in einem Messzyklus nacheinander vom Tomografiemessgerät einzelnen in jede der Tomografieelektroden ein Anregungssignal eingespeist und vom Durchflussmessgerät ein vom Anregungssignal bewirktes Zustandssignal an den Durchflussmesselektroden gemessen, das Zustandssignal der Tomografieelektrode zugeordnet und abgespeichert. Nach einem Messzyklus gibt es also von jeder der Tomografieelektroden ein abgespeichertes Zustandssignal. Das Zustandssignal ist zum Beispiel eine Spannung.

In einem weiteren Schritt wird der Messzyklus mindestens ein weiteres Mal ausgeführt.

In einem weiteren Schritt wird eine Veränderung des Zustandssignals mindestens einer der Tomografieelektroden zwischen Messzyklen erkannt, als eine Beschädigung der mindestens einen Tomografieelektrode gewertet und einem Benutzer signalisiert. Dieser Schritt wird zum Beispiel vom Durchflussmessgerät oder vom Tomografiemessgerät ausgeführt. Nachfolgend wird zum Beispiel in einem weiteren Schritt ein Kalibrierverfahren durchgeführt, um die Beschädigung zu kompensieren.

Im Folgenden wird davon ausgegangen, dass der Messzyklus nicht nur zwei Mal, sondern gegebenenfalls auch mehrfach ausgeführt wird.

In einer Ausgestaltung des Verfahrens wird eine Abweichung des Zustandssignals der mindestens einen Tomografieelektrode zwischen Messzyklen erkannt und als die Veränderung betrachtet. Zum Beispiel hat das Zustandssignal in einem Messzyklus einen ersten Wert und in einem anderen Messzyklus einen zweiten Wert. Wenn eine Subtraktion des zweiten Werts vom ersten Wert ungleich null ist, dann liegt eine Abweichung vor. Das ist eine grundlegende Weise, eine Beschädigung zu erkennen.

Für gewöhnlich treten Beschädigungen der Tomografieelektroden nicht rotationssymmetrisch in Bezug auf die Längsachse des Messrohrs auf. Oftmals sind Feststoffe im Medium verantwortlich für die Beschädigungen. Das wird in nachfolgenden Ausgestaltungen ausgenutzt, welche Muster der Zustandssignale betrachten, um eine Zuverlässigkeit der Erkennung von Beschädigungen zu verbessern.

In einer Ausgestaltung wird jeweils eine Abfolge der Zustandssignale einer der Messzyklen als ein Muster betrachtet. Vorzugsweise ist die Abfolge eine zeitliche Abfolge der Zustandssignale. Weiter wird eine qualitative Abweichung der Muster zwischen Messzyklen erkannt und als die Veränderung betrachtet. Eine qualitative Abweichung ist insbesondere eine Abweichung einer Form der Muster voneinander.

Zum Beispiel wird der Messzyklus ein erstes und ein zweites Mal ausgeführt. Eine Abfolge der Zustandssignale des ersten Messzyklus wird als erstes Muster und eine Abfolge der Zustandssignale des zweiten Messzyklus wird als zweites Muster betrachtet. Eine qualitative Abweichung zwischen dem ersten und dem zweiten Muster wird als eine Beschädigung der Tomografieelektrode gewertet, an welcher die Abweichung der Muster auftritt.

In einer weiteren Ausgestaltung wird jeweils ein Mittelwert aus den mindestens zwei Zustandssignalen einer jeden der Tomografieelektroden gebildet und eine Abfolge der Mittelwerte wird als ein Muster betrachtet. Vorzugsweise ist die Abfolge eine zeitliche Abfolge der Mittelwerte. Eine qualitative Abweichung der Muster wird erkannt und als die Veränderung betrachtet.

Zum Beispiel wird der Messzyklus ein erstes, ein zweites, ein drittes und ein viertes Mal ausgeführt. Aus jeweils einem Zustandssignal des ersten und dem entsprechenden Zustandssignal des zweiten Zyklus wird ein Mittelwert gebildet und die Abfolge der Mittelwerte als ein erstes Muster betrachtet. Dementsprechend wird aus jeweils einem Zustandssignal des dritten und dem entsprechenden Zustandssignal des vierten Zyklus ein Mittelwert gebildet und die Abfolge der Mittelwerte als ein zweites Muster betrachtet. Eine qualitative Abweichung zwischen dem ersten und dem zweiten Muster wird als eine Beschädigung der Tomografieelektrode gewertet, an welcher die Abweichung der Muster auftritt.

In einer Weiterbildung von einem der vorstehenden Ausführungsbeispiele, in welchen Muster betrachtet werden, wird eines der Muster als ein Referenzmuster für das Erkennen einer Veränderung verwendet. Vorzugsweise wird das Referenzmuster während einer Inbetriebnahme oder einer Kalibrierung des Verbundmessgeräts bestimmt. Die Bestimmung des Referenzmusters während einer Inbetriebnahme oder einer Kalibrierung ist vorteilhaft, da Randbedingungen, welche Einfluss auf das Verbundmessgerät haben, bekannt sind und berücksichtigt werden.

In einer Weiterbildung wird für das Referenzmuster ein Referenzmedium ohne Feststoffanteil, also ohne feste Phase, als das Medium verwendet. Vorzugsweise wird ein Medium nur mit einer flüssigen Phase wie Wasser als das Referenzmedium verwendet. Die Verwendung eines Referenzmediums ohne Feststoffanteil ist vorteilhaft, da Feststoffe nichtreproduzierbare Zustandssignale verursachen.

In einer Weiterbildung wird auch für einzelne nachfolgende Muster das Referenzmedium verwendet. Demnach werden die nachfolgenden Muster und das Referenzmuster mit dem gleichen Referenzmedium bestimmt. Dadurch werden Einflüsse auf die Bestimmung der Muster durch unterschiedliche Medien ausgeschlossen.

In einer weiteren Weiterbildung einer der vorstehenden Ausgestaltungen, in welchen Muster betrachtet werden, wird eine quantitative Abweichung der Muster in Form eines Skalierungsfaktors erkannt und als eine Veränderung einer Leitfähigkeit des Mediums gewertet. Zuvor ist ausgeführt worden, dass eine qualitative Abweichung, insbesondere eine Abweichung einer Form der Muster voneinander, als eine Beschädigung gewertet wird. Bei einer quantitativen Abweichung der Muster in Form eines Skalierungsfaktors tritt keine Abweichung einer Form der Muster voneinander auf. Der Bewertung der quantitativen Abweichung der Muster als eine Veränderung der Leitfähigkeit liegt die Annahme zugrunde, dass eine gleichzeitige Beschädigung von allen Tomografieelektroden nicht eintritt.

In einer weiteren Ausgestaltung des Verfahrens wird der Messzyklus fortwährend ausgeführt. Somit findet die Überwachung des Verbundmessgeräts auch fortwährend statt.

In einer Weiterbildung der vorstehenden Ausgestaltung wird die Veränderung nur dann als eine Beschädigung gewertet, wenn die Veränderung über einen Zeitraum von mehr als 1 Minute, vorzugsweise von mehr als 10 Minuten vorliegt. Dieser Weiterbildung liegt die Erkenntnis zugrunde, dass sich oftmals eine Zusammensetzung des Mediums vorübergehend verändert, welche ohne diesen Zeitraum als eine Veränderung gewertet wird.

In einer weiteren Ausgestaltung des Verfahrens wird frei von Anregungssignalen an den Tomografieelektroden ein Offsetsignal an den Durchflussmesselektroden gemessen und wird dieses Offsetsignal in den Zustandssignalen kompensiert, zum Beispiel, indem das Offsetsignal von den Zustandssignalen subtrahiert wird. Vorzugsweise wird das regelmäßig ausgeführt, sodass auch sich verändernde Offsetsignale die Zustandssignale nicht beeinträchtigen. Durch die Kompensation des Offsetsignals in den Zustandssignalen ist die Vergleichbarkeit der Zustandssignale verbessert und werden keine irrtümlichen Veränderungen erkannt.

In einer weiteren Ausgestaltung wird das Impedanztomografie-Messverfahren vom Tomografiemessgerät ausgeführt. Das Verfahren zur Überwachung des Verbundmessgeräts und das Impedanztomografie-Messverfahren werden also zusammen ausgeführt. Das Verfahren beeinträchtigt folglich nicht die eigentliche Funktion des Verbundmessgeräts in Form des Impedanztomografie-Messverfahrens.

Dann bietet es sich auch an, dass in einer weiteren Ausgestaltung das Anregungssignal zum Impedanztomografie-Messverfahren gehört und dass vom Anregungssignal die Tomografiesignale bewirkt werden. Somit bewirkt das Anregungssignal gleichzeitig zum einen die Zustandssignale und zum anderen die Tomografiesignale, wodurch Zeit eingespart wird.

Jeder der Messzyklen beginnt damit, dass vom Tomografiemessgerät das Anregungssignal in eine erste der Tomografieelektroden eingespeist wird und dass vom Durchflussmessgerät ein von dem Anregungssignal bewirktes Zustandssignal der ersten Tomografieelektrode an den Durchflussmesselektroden gemessen wird. Der Beginn eines Messzyklus kann auf verschiedene Weisen vom Durchflussmessgerät erkannt werden. Zwei davon werden im Folgenden beschrieben.

In einer Ausgestaltung wird vom Durchflussmessgerät eine Spannung zwischen den Durchflussmesselektroden größer als eine Schwellwertspannung als ein Beginn einer der Messzyklen gewertet. Die Schwellwertspannung wird dabei größer als Spannungen von Durchflussmesssignalen gewählt. Dieser Ausgestaltung liegt die Erkenntnis zu Grunde, dass das Anregungssignal eine Spannung bewirkt, die größer ist als die in das Medium durch das Strömen des Mediums induzierten Spannungen.

In einer anderen Ausgestaltung des Verfahrens wird vom Tomografiemessgerät dem Durchflussmessgerät ein Beginn einer der Messzyklen mittels eines Statussignals signalisiert.

In einer weiteren Ausgestaltung des Verfahrens wird ein Feststoffanteil des Mediums und/oder eine Größenverteilung von Feststoffen im Medium als die Eigenschaft bestimmt. Wenn das Medium keinen Feststoffanteil aufweist, dann werden dementsprechend ein Feststoffanteil und eine Größenverteilung von null bestimmt.

In einer weiteren Ausgestaltung wird das Durchflussmessverfahren vom Durchflussmessgerät ausgeführt. Das Verfahren zur Überwachung des Verbundmessgeräts und das Durchflussmessverfahren werden also zusammen ausgeführt. Das Verfahren beeinträchtigt folglich nicht die eigentliche Funktion des Verbundmessgeräts in Form des Durchflussmessverfahrens.

In einer Weiterbildung der vorstehenden Ausgestaltung wird ein geschaltetes Gleichmagnetfeld zur Erzeugung der Durchflussmesssignale verwendet. Unter Verwendung der Durchflussmesssignale wird eine Drift der Durchflussmesssignale bestimmt und kompensiert und die Drift auch in den Zustandssignalen kompensiert. Dadurch wird eine Qualität der Überwachung des Verbundmessgeräts verbessert.

In einer weiteren Ausgestaltung des Verfahrens weist das Anregungssignal eine Frequenz zwischen 10 kHz und 50 kHz, vorzugsweise zwischen 10 kHz und 20 kHz auf. Anregungssignale mit einer solchen Frequenz eignen sich sowohl für das Impedanztomografie-Messverfahren als auch das Verfahren zur Überwachung des Verbundmessgeräts.

In einer weiteren Ausgestaltung des Verfahrens weist das Verbundmessgerät ein Display auf und wird die Beschädigung über das Display signalisiert. Alternativ oder ergänzend weist das Verbundmessgerät einen Statusausgang auf und wird die Beschädigung über den Statusausgang signalisiert. Alternativ oder ergänzend weist das Verbundmessgerät eine Busschnittstelle auf und wir die Beschädigung über die Busschnittstelle signalisiert.

Das Messrohr ist grundsätzlich einstückig oder mehrstückig. In einer weiteren Ausgestaltung weist das Messrohr ein erstes Segment und ein zweites Segment auf und ist somit mehrstückig. Es weist auch weiterhin die zuvor erwähnte Erdung auf. Zum Beispiel ist das erste Segment ein erstes Teilmessrohr und das zweite Segment ein zweites Teilmessrohr. Die Durchflussmesselektroden sind im ersten Segment und die Tomografieelektroden im zweiten Segment. Das Verbundmessgerät weist ein Durchflussmessgerät und Tomografiemessgerät mit eignen Teilmessrohren auf.

In einer Weiterbildung der Ausgestaltung sind das erste Segment und das zweite Segment durch ein Rohrsegment voneinander beabstandet. Die Beabstandung verhindert jedoch nicht, dass die vom elektrischen Impedanztomografie-Messverfahren erzeugten elektrischen Felder Störspannungen zwischen den Durchflussmesselektroden bewirken. Das zuvor beschriebene Verfahren löst das Problem auch hier.

Im Einzelnen gibt es nun eine Vielzahl von Möglichkeiten, das erfindungsgemäße Verfahren zur Überwachung eines Verbundmessgeräts auszugestalten und weiterzubilden. Dazu wird verwiesen einerseits auf die dem unabhängigen Patentanspruch nachgeordneten Patentansprüche und andererseits auf die folgende Beschreibung eines Ausführungsbeispiels in Verbindung mit der Zeichnung. In der Zeichnung zeigt
- Figur 1: eine geschnittene Seitenansicht eines Verbundmessgeräts und
- Figur 2: einen Ablaufplan eines Verfahrens zur Überwachung des Verbundmessgeräts.

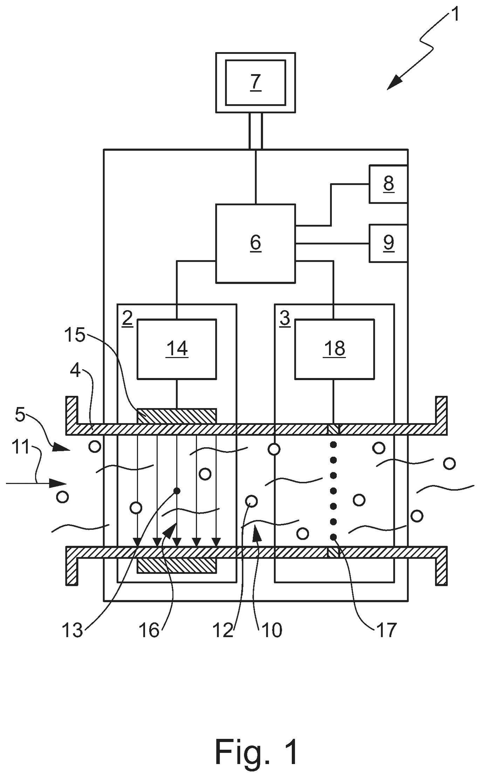

Figur 1 zeigt in einer geschnittenen Seitenansicht ein Verbundmessgerät 1. Das Verbundmessgerät 1 weist ein Durchflussmessgerät 2, eine Tomografiemessgerät 3, ein Messrohr 4 mit einem Messrohrinnenraum 5, eine Verbundmessgerätsteuerung 6, ein Display 7, einen Statusausgang 8 und eine Busschnittstelle 9 auf. In diesem Ausführungsbeispiel ist das Messrohr 4 einstückig, es weist also nicht ein erstes und ein zweites Segment auf.

Ein Medium 10 wird in den Messrohrinnenraum 5 eingebracht, indem dieses durch den Messrohrinnenraum 5 in Richtung des Pfeils 11 geströmt wird. Das Medium 10 weist eine flüssige Phase und eine feste Phase auf. Die feste Phase sind Feststoffe 12. In Figur 1 ist nur ein Feststoff 12 stellvertretend für alle Feststoffe 12 mit einem Bezugszeichen versehen. Das Verbundmessgerät 1 und damit auch das Durchflussmessgerät 2 und das Tomografiemessgerät 3 sind im Betrieb.

Das Durchflussmessgerät weist zwei Durchflussmesselektroden 13, eine Durchflussmessgerätsteuerung 14 und eine Magnetfelderzeugungsvorrichtung 15 auf. Die Durchflussmesselektroden 13 sind im Messrohrinnenraum 5, wobei in Figur 1 nur eine der beiden Durchflussmesselektroden 12 sichtbar ist. Die Magnetfelderzeugungsvorrichtung 15 ist zur Erzeugung eines Magnetfelds 16 im Medium 10 im Messrohrinnenraum 5 ausgebildet. Das Durchflussmessgerät 2 ist zur Umsetzung eines magnetisch-induktiven Durchflussmessverfahrens ausgebildet.

Das Durchflussmessgerät 2 führt das Durchflussmessverfahren aus. Dabei wird eine Durchflussrate des Mediums 10 durch den Messrohrinnenraum 5 unter Verwendung von an den Durchflussmesselektroden 13 anliegenden Durchflussmesssignalen bestimmt. Dazu wird von der Durchflussmessgerätsteuerung 14 unter Verwendung der Magnetfelderzeugungsvorrichtung 15 das Magnetfeld 16 erzeugt, das Durchflussmesssignal gemessen und unter Verwendung des Durchflussmesssignals die Durchflussrate des Mediums 10 durch das Messrohr 4 bestimmt. Das Magnetfeld 16 ist ein geschaltetes Gleichmagnetfeld, welches durch die Durchflussmessgerätsteuerung 14 gesteuert zwischen einer ersten und einer zweiten Sollmagnetfeldstärke wechselt. Die erste und zweite Sollmagnetfeldstärke haben einen gleichen Betrag, aber entgegengesetzte Vorzeichen. Das Strömen des Mediums 10 durch das Magnetfeld 16 induziert eine Spannung in das Medium 10, welche zwischen den Durchflussmesselektroden 13 anliegt und zum Durchflussmesssignal beiträgt. Darüber hinaus wird von der Durchflussmessgerätsteuerung 14 unter Verwendung der Durchflussmesssignale eine Drift der Durchflussmesssignale bestimmt und in der Durchflussrate kompensiert. Die Bestimmung der Drift ist aufgrund der Verwendung des geschalteten Gleichmagnetfelds möglich.

Das Tomografiemessgerät 3 weist sechzehn Tomografieelektroden 17 und eine Tomografiemessgerätsteuerung 18 auf. Die Tomografieelektroden 17 sind im Messrohrinnenraum 5, wobei in Figur 1 nur neun der sechzehn Tomografieelektroden 17 sichtbar sind und nur eine dieser Tomografieelektroden 17 stellvertretend für alle Tomografieelektroden 17 mit einem Bezugszeichen versehen ist. Das Tomografiemessgerät 3 ist zur Umsetzung eines elektrischen Impedanztomografie-Messverfahrens ausgebildet. Bei Ausführung des Impedanztomografie-Messverfahrens werden Eigenschaften des Mediums 10 im Messrohrinnenraum 5 unter Verwendung von an den Tomografieelektroden 17 anliegenden Tomografiesignalen bestimmt. Die bestimmten Eigenschaften sind hier ein Feststoffanteil der Feststoffe 12 am Medium 10 und eine Größenverteilung der Feststoffe 12.

Das Tomografiemessgerät 3 führt das Impedanztomografie-Messverfahren aus. Dabei wird von der Tomografiemessgerätsteuerung 18 nacheinander einzeln in jede der Tomografieelektroden 17 ein Anregungssignal eingespeist und werden an den übrigen Tomografieelektroden 17 die Tomografiesignale gemessen und unter Verwendung der Tomografiesignale die Eigenschaften des Mediums 10 bestimmt. Das Anregungssignal ist eine Spannung und weist eine Frequenz von 15 kHz auf.

Vom Verbundmessgerät 1 wird darüber hinaus ein Verfahren zur Überwachung des Verbundmessgeräts 1 ausgeführt. Das Verfahren wird dabei grundsätzlich von der Verbundmessgerätsteuerung 6 ausgeführt, wozu insbesondere auch das Steuern und Koordinieren der Durchflussmessgerätsteuerung 14 und der Tomografiemessgerätsteuerung 18 gehören. Davon unberührt bleibt, dass von der Durchflussmessgerätsteuerung 14 grundsätzlich das Durchflussmessverfahren und von der Tomografiemessgerätsteuerung 18 grundsätzlich das Impedanztomografie-Messverfahren ausführt wird.

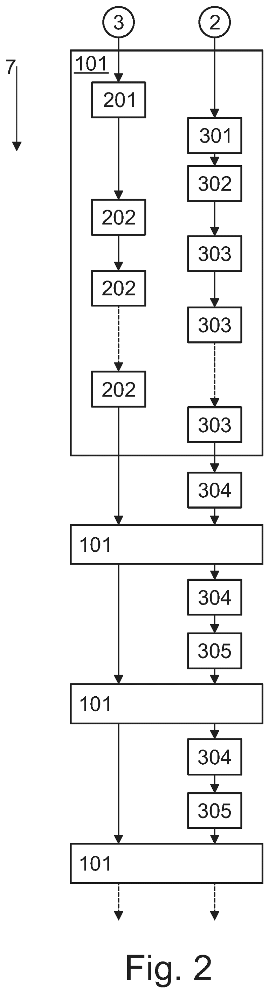

Das Verfahren umfasst einen Messzyklus 101. Figur 2 zeigt einen Ablauf des Messzyklus 101 über einer Zeit t für das Durchflussmessgerät 2 und das Tomografiemessgerät 3. Der Messzyklus 101 weist die folgenden Schritte auf.

In einem Schritt 201 wird vom Tomografiegerät 3 in eine erste der Tomografieelektroden 17 das Anregungssignal eingespeist. Das Anregungssignal gehört also sowohl zum Impedanztomografie-Messverfahren als auch zum Verfahren.

In einem Schritt 301 wird vom Durchflussmessgerät 2 eine Spannung zwischen den Durchflussmesselektroden 13 größer als eine Schwellwertspannung erkannt und als ein Beginn des Messzyklus 101 für das Durchflussmessgerät 2 gewertet, weshalb vom Durchflussmessgerät 2 die nachfolgenden Schritte ausgeführt werden.

In einem Schritt 302 wird vom Durchflussmessgerät 2 ein vom Anregungssignal bewirktes Zustandssignal an den Durchflussmesselektroden 13 gemessen, das Zustandssignal der ersten Tomografieelektrode 17 zugeordnet und abgespeichert. Zustandssignale sind hier Spannungen.

In einem Schritt 202 wird vom Tomografiegerät 3 in eine zweite der Tomografieelektroden 17 das Anregungssignal eingespeist.

In einem Schritt 303 wird vom Durchflussmessgerät 2 ein vom Anregungssignal bewirktes Zustandssignal an den Durchflussmesselektroden 13 gemessen, das Zustandssignal der zweiten Tomografieelektrode 17 zugeordnet und abgespeichert.

Die Schritte 202 und 303 werden für die verbliebenen Tomografieelektroden 17 entsprechend wiederholt. Danach endet der Messzyklus 101.

Dann wird in einem Schritt 304 vom Durchflussmessgerät 2 eine zeitliche Abfolge der Zustandssignale des Messzyklus 101 als ein Muster betrachtet.

Anschließend wird der Messzyklus 101 ein zweites Mal ausgeführt.

Nachdem der Messzyklus zwei Mal ausgeführt worden ist, wird der Schritt 304 erneut ausgeführt und dann in einem Schritt 305 vom Durchflussmessgerät 2 eine qualitative Abweichung der Muster zwischen Messzyklen erkannt, als eine Veränderung des Zustandssignals mindestens einer der Tomografieelektroden 17 betrachtet, als eine Beschädigung der mindestens einen Tomografieelektrode 17 gewertet, wenn die Veränderung zumindest 10 Minuten vorliegt, und einem Benutzer über das Display signalisiert und über den Statusausgang 8 und die Busschnittstelle 9 ausgegeben. Weiter wird vom Durchflussmessgerät 2 eine quantitative Abweichung der Muster in Form eines Skalierungsfaktors zwischen Messzyklen erkannt und als eine Veränderung einer Leitfähigkeit des Mediums 10 gewertet und wie die Beschädigung signalisiert und ausgegeben.

Weiterhin wird vom Durchflussmessgerät 2 fortlaufend die Drift in den Zustandssignalen kompensiert.

Das beschriebene Verfahren wird fortlaufend ausgeführt.

### Bezugszeichen

- 1: Verbundmessgerät
- 2: Durchflussmessgerät
- 3: Tomografiemessgerät
- 4: Messrohr
- 5: Messrohrinnenraum
- 6: Verbundmessgerätsteuerung
- 7: Display
- 8: Statusausgang
- 9: Busschnittstelle
- 10: Medium
- 11: Pfeil
- 12: Feststoff
- 13: Durchflussmesselektrode
- 14: Durchflussmessgerätsteuerung
- 15: Magnetfelderzeugungsvorrichtung
- 16: Magnetfeld
- 17: Tomografieelektrode
- 18: Tomografiemessgerätsteuerung

## Patentansprüche

1. Verfahren zur Überwachung eines Verbundmessgeräts (1) mit einem Durchflussgerät (2), einem Tomografiemessgerät (3) und einem Messrohr (4) mit einem Messrohrinnenraum (5),
wobei ein Medium (10) in den Messrohrinnenraum (5) eingebracht wird,
wobei das Durchflussmessgerät (2) zwei Durchflussmesselektroden (13) im Messrohrinnenraum (5) aufweist und zur Umsetzung eines magnetisch-induktiven Durchflussmessverfahrens ausgebildet ist, wobei bei Ausführung des Durchflussmessverfahrens eine Durchflussrate des Mediums (10) durch den Messrohrinnenraum (5) unter Verwendung von an den Durchflussmesselektroden (13) anliegenden Durchflussmesssignalen bestimmt wird,
wobei das Tomografiemessgerät (3) mindestens drei Tomografieelektroden (17) im Messrohrinnenraum (5) aufweist und zur Umsetzung eines elektrischen Impedanztomografie-Messverfahrens ausgebildet ist, wobei bei Ausführung des Impedanztomografie-Messverfahrens mindestens eine Eigenschaft des Mediums (10) im Messrohrinnenraum (5) unter Verwendung von an den Tomografieelektroden (17) anliegenden Tomografiesignalen bestimmt wird,
**dadurch gekennzeichnet, dass** in einem Messzyklus nacheinander vom Tomografiemessgerät (3) einzeln in jede der Tomografieelektroden (17) ein Anregungssignal eingespeist und vom Durchflussmessgerät (2) ein vom Anregungssignal bewirktes Zustandssignal an den Durchflussmesselektroden (13) gemessen, das Zustandssignal der Tomografieelektrode (17) zugeordnet und abgespeichert wird, wobei der Messzyklus mindestens ein weiteres Mal ausgeführt wird und wobei eine Veränderung des Zustandssignals mindestens einer der Tomografieelektroden (17) zwischen Messzyklen erkannt, als eine Beschädigung der mindestens einen Tomografieelektrode (17) gewertet und einem Benutzer signalisiert wird.

2. Verfahren nach Anspruch 1, wobei eine Abweichung des Zustandssignals der mindestens einen Tomografieelektrode (17) zwischen Messzyklen erkannt und als die Veränderung betrachtet wird.

3. Verfahren nach Anspruch 1, wobei jeweils eine Abfolge der Zustandssignale einer der Messzyklen als ein Muster betrachtet, eine qualitative Abweichung der Muster zwischen Messzyklen erkannt und als die Veränderung betrachtet wird oder wobei jeweils ein Mittelwert aus den mindestens zwei Zustandssignalen einer jeden der Tomografieelektroden (17) gebildet, eine Abfolge der Mittelwerte als ein Muster betrachtet, eine qualitative Abweichung der Muster erkannt und als die Veränderung betrachtet wird.

4. Verfahren nach Anspruch 3, wobei eines der Muster als ein Referenzmuster für das Erkennen der Veränderung verwendet wird und vorzugsweise das Referenzmuster während einer Inbetriebnahme oder einer Kalibrierung des Verbundmessgeräts (1) bestimmt wird.

5. Verfahren nach Anspruch 4, wobei für das Referenzmuster ein Referenzmedium ohne Feststoffanteil als das Medium (10), vorzugsweise Wasser als das Referenzmedium verwendet wird oder wobei für einzelne nachfolgende Muster das Referenzmedium verwendet wird.

6. Verfahren nach einem der Ansprüche 3 bis 5, wobei eine quantitative Abweichung der Muster in Form eines Skalierungsfaktors erkannt und als eine Veränderung einer Leitfähigkeit des Mediums (10) gewertet wird.

7. Verfahren nach einem der Ansprüche 1 bis 6, wobei der Messzyklus fortwährend ausgeführt wird und wobei vorzugsweise die Veränderung nur dann als eine Beschädigung gewertet wird, wenn die Veränderung über einen Zeitraum von mehr als einer Minute, vorzugsweise mehr 10 Minuten vorliegt.

8. Verfahren nach einem der Ansprüche 1 bis 7, wobei frei von Anregungssignalen an den Tomografieelektroden (17) ein Offsetsignal an den Durchflussmesselektroden (13) gemessen und in den Zustandssignalen kompensiert wird.

9. Verfahren nach einem der Ansprüche 1 bis 8, wobei das Impedanztomografie-Messverfahren vom Tomografiemessgerät (3) ausgeführt wird und wobei vorzugsweise das Anregungssignal zum Impedanztomografie-Messverfahren gehört und vom Anregungssignal die Tomografiesignale bewirkt werden.

10. Verfahren nach Anspruch 8 oder 9, wobei vom Durchflussmessgerät (2) eine Spannung zwischen den Durchflussmesselektroden (13) größer als eine Schwellwertspannung als ein Beginn einer der Messzyklen gewertet wird und wobei die Schwellwertspannung größer als Spannungen von Durchflussmesssignalen gewählt wird.

11. Verfahren nach einem der Ansprüche 1 bis 10, wobei vom Tomografiemessgerät (3) dem Durchflussmessgerät (2) ein Beginn einer der Messzyklen mittels eines Statussignals signalisiert wird.

12. Verfahren nach einem der Ansprüche 1 bis 11, wobei ein Feststoffanteil des Mediums (10) und/oder eine Größenverteilung von Feststoffen im Medium (10) als die Eigenschaft bestimmt wird.

13. Verfahren nach einem der Ansprüche 1 bis 12, wobei das Durchflussmessverfahren vom Durchflussmessgerät (2) ausgeführt wird und wobei vorzugsweise das Durchflussmessverfahren ein geschaltetes Gleichmagnetfeld (16) zur Erzeugung der Durchflussmesssignale verwendet, unter Verwendung der Durchflussmesssignale eine Drift der Durchflussmesssignale bestimmt und die Drift in den Zustandssignalen kompensiert wird.

14. Verfahren nach einem der Ansprüche 1 bis 13, wobei das Anregungssignal eine Frequenz zwischen 10 kHz und 50 kHz, vorzugsweise zwischen 10 kHz und 20 kHz aufweist.

15. Verfahren nach einem der Ansprüche 1 bis 14, wobei das Verbundmessgerät (1) ein Display (7) aufweist und die Beschädigung über das Display (7) signalisiert wird und/oder das Verbundmessgerät (1) einen Statusausgang (8) aufweist und die Beschädigung über den Statusausgang (8) signalisiert wird und/oder das Verbundmessgerät (1) eine Busschnittstelle (9) aufweist und die Beschädigung über die Busschnittstelle (9) signalisiert wird.

16. Verfahren nach einem der Ansprüche 1 bis 15, wobei das Messrohr (4) ein erstes Segment und ein zweites Segment aufweist, wobei die Durchflussmesselektroden (13) im ersten Segment und die Tomografieelektroden (17) im zweiten Segment sind und wobei vorzugsweise das erste Segment und das zweite Segment durch ein Rohrsegment voneinander beabstandet sind.

## Claims

1. Method for monitoring a composite measuring device (1) comprising a flowmeter (2), a tomography measuring device (3), and a measuring tube (4) with a measuring tube interior (5),
wherein a medium (10) is introduced into the measuring tube interior (5),
wherein the flowmeter (2) comprises two flow-measuring electrodes (13) in the measuring tube interior (5) and is designed to implement a magnetic-inductive flow measurement method, wherein, during performance of the flow measurement method, a flow rate of the medium (10) through the measuring tube interior (5) is determined using flow-measuring signals present at the flow-measuring electrodes (13),
wherein the tomography measuring device (3) comprises at least three tomography electrodes (17) within the measuring tube interior (5) and is designed to perform an electrical impedance tomography measurement method, wherein, when performing the impedance tomography measurement method, at least one property of the medium (10) within the measuring tube interior (5) is determined using tomography signals present at the tomography electrodes (17),
**characterized in that**, during a measurement cycle, the tomography measuring device (3) sequentially feeds an excitation signal individually into each tomography electrode (17), the flowmeter (2) measures, at the flow-measuring electrodes (13), a state signal produced by the excitation signal, and the state signal is assigned to the tomography electrode (17) and stored,
wherein the measurement cycle is performed at least one more time and
wherein a change in the state signal of at least one of the tomography electrodes (17) between measurement cycles is detected, evaluated as damage to the at least one tomography electrode (17), and signaled to a user.

2. Method according to claim 1, wherein a deviation in the state signal of the at least one tomography electrode (17) between measurement cycles is detected and considered to be the change.

3. Method according to claim 1, wherein a sequence of the state signals from one of the measurement cycles is considered a pattern, a qualitative deviation of the patterns between measurement cycles is detected and considered the change, or wherein an average value each is calculated from the at least two state signals of each of the tomography electrodes (17), a sequence of the average values is considered a pattern, a qualitative deviation between the patterns is detected and is regarded as the change.

4. Method according to claim 3, wherein one of the patterns is used as a reference pattern for detecting the change, and the reference pattern is preferably determined during commissioning or calibration of the composite measuring device (1).

5. Method according to claim 4, wherein a reference medium containing no solids is used as the medium (10) for the reference sample, preferably water as the reference medium, or wherein the reference medium is used for individual subsequent patterns.

6. Method according to any one of claims 3 to 5, wherein a quantitative deviation of the patterns in the form of a scaling factor is detected and evaluated as a change in the conductivity of the medium (10).

7. Method according to any one of claims 1 to 6, wherein the measurement cycle is performed continuously and wherein, preferably, the change is evaluated as damage only if it persists for a period of more than one minute, preferably more than 10 minutes.

8. Method according to any one of claims 1 to 7, wherein, in the absence of excitation signals at the tomography electrodes (17), an offset signal is measured at the flow-measuring electrodes (13) and compensated for in the state signals.

9. Method according to any one of claims 1 to 8, wherein the impedance tomography measurement method is performed by the tomography measuring device (3), and wherein, preferably, the excitation signal is part of the impedance tomography measurement method and the tomography signals are generated by the excitation signal.

10. Method according to claim 8 or 9, wherein the flowmeter (2) evaluates a voltage between the flow-measuring electrodes (13) that is greater than a threshold voltage as the start of one of the measurement cycles, and wherein the threshold voltage is selected to be greater than the voltages of the flow-measuring signals.

11. Method according to any one of claims 1 to 10, wherein the tomography measuring device (3) signals the start of one of the measurement cycles to the flowmeter (2) by means of a state signal.

12. Method according to any one of claims 1 to 11, wherein a solids content of the medium (10) and/or a size distribution of solids in the medium (10) is determined as the property.

13. Method according to any one of claims 1 to 12, wherein the flow measurement method is performed by the flowmeter (2) and wherein, preferably, the flow measurement method uses a switched DC magnetic field (16) to generate the flow-measuring signals, determines a drift in the flow-measuring signals using the flow-measuring signals, and compensates for the drift in the state signals.

14. Method according to any one of claims 1 to 13, wherein the excitation signal has a frequency between 10 kHz and 50 kHz, preferably between 10 kHz and 20 kHz.

15. Method according to any one of claims 1 to 14, wherein the composite measuring device (1) includes a display (7) and the damage is signaled via the display (7), and/or the composite measuring device (1) comprises a state output (8) and the damage is signaled via the state output (8), and/or the composite measuring device (1) comprises a bus interface (9) and the damage is signaled via the bus interface (9).

16. Method according to any one of claims 1 to 15, wherein the measuring tube (4) comprises a first segment and a second segment, wherein the flow-measuring electrodes (13) are in the first segment and the tomography electrodes (17) are in the second segment, and wherein, preferably, the first segment and the second segment are spaced apart from one another by a tube segment.

## Revendications

1. Procédé de surveillance d'un dispositif de mesure composé (1) comportant un débitmètre (2), un dispositif de mesure tomographique (3) et un tube de mesure (4) comportant un espace interne (5) de tube de mesure,
dans lequel un milieu (10) est introduit dans l'espace interne (5) de tube de mesure,
dans lequel le débitmètre (2) présente deux électrodes de mesure de débit (13) dans l'espace interne (5) de tube de mesure et est conçu pour mettre en œuvre un procédé de mesure de débit inductif-magnétique, dans lequel, lors de l'exécution du procédé de mesure de débit, un débit du milieu (10) à travers l'espace interne (5) de tube de mesure est déterminé à l'aide de signaux de mesure de débit délivrés aux électrodes de mesure de débit (13), dans lequel le dispositif de mesure tomographique (3) présente au moins trois électrodes tomographiques (17) dans l'espace interne (5) de tube de mesure et est conçu pour mettre en œuvre un procédé de mesure tomographique d'impédance électrique, dans lequel, lors de l'exécution du procédé de mesure tomographique d'impédance, au moins une propriété du milieu (10) dans l'espace interne (5) de tube de mesure est déterminée à l'aide de signaux tomographiques délivrés aux électrodes tomographiques (17),
**caractérisé en ce que**
dans un cycle de mesure, le dispositif de mesure tomographique (3) injecte successivement un signal d'excitation dans chacune des électrodes tomographiques (17) et le dispositif de mesure de débit (2) mesure un signal d'état produit par le signal d'excitation au niveau des électrodes de mesure de débit (13), le signal d'état est associé à l'électrode tomographique (17) et mémorisé, le cycle de mesure étant exécuté au moins une fois de plus et une modification du signal d'état d'au moins l'une des électrodes tomographiques (17) entre les cycles de mesure étant détectée, évaluée comme un endommagement de ladite au moins une électrode tomographique (17) et signalée à un utilisateur.

2. Procédé selon la revendication 1, dans lequel un écart du signal d'état de ladite au moins une électrode tomographique (17) entre des cycles de mesure est détecté et considéré comme la modification.

3. Procédé selon la revendication 1, dans lequel une séquence des signaux d'état de l'un des cycles de mesure est à chaque fois considérée comme un motif, un écart qualitatif des motifs entre les cycles de mesure est détecté et est considéré comme la modification ou dans lequel une valeur moyenne est à chaque fois formée à partir desdits au moins deux signaux d'état de chacune des électrodes tomographiques (17), une séquence des valeurs moyennes est considérée comme un motif, un écart qualitatif des motifs est détecté et est considéré comme la modification.

4. Procédé selon la revendication 3, dans lequel l'un des motifs est utilisé comme motif de référence pour la détection de la modification et de préférence le motif de référence est déterminé pendant une mise en service ou un étalonnage du dispositif de mesure composé (1).

5. Procédé selon la revendication 4, dans lequel, pour le motif de référence, un milieu de référence sans teneur en solides est utilisé en tant que milieu (10), de préférence de l'eau est utilisée en tant que milieu de référence, ou le milieu de référence est utilisé pour des motifs consécutifs individuels.

6. Procédé selon l'une des revendications 3 à 5, dans lequel un écart quantitatif des motifs sous forme d'un facteur d'échelle est détecté et évalué comme une modification d'une conductivité du milieu (10).

7. Procédé selon l'une des revendications 1 à 6, dans lequel le cycle de mesure est exécuté en continu et la modification n'est de préférence évaluée comme un endommagement que lorsque la modification est présente sur une période de plus d'une minute, de préférence de plus de 10 minutes.

8. Procédé selon l'une des revendications 1 à 7, dans lequel un signal de décalage est mesuré au niveau des électrodes de mesure de débit (13), en l'absence de signaux d'excitation au niveau des électrodes tomographiques (17), et compensé dans les signaux d'état.

9. Procédé selon l'une des revendications 1 à 8, dans lequel le procédé de mesure tomographique d'impédance est exécuté par le dispositif de mesure tomographique (3) et dans lequel le signal d'excitation appartient de préférence au procédé de mesure tomographique d'impédance et les signaux tomographiques sont produits par le signal d'excitation.

10. Procédé selon la revendication 8 ou 9, dans lequel une tension entre les électrodes de mesure de débit (13) supérieure à une tension de seuil est évaluée par le dispositif de mesure de débit (2) comme un début d'un des cycles de mesure et dans lequel la tension de seuil est choisie supérieure à des tensions de signaux de mesure de débit.

11. Procédé selon l'une des revendications 1 à 10, dans lequel un début d'un des cycles de mesure est signalé par le dispositif de mesure tomographique (3) au dispositif de mesure de débit (2) au moyen d'un signal d'état.

12. Procédé selon l'une quelconque des revendications 1 à 11, dans lequel une teneur en solides du milieu (10) et/ou une distribution granulométrique de solides dans le milieu (10) est/sont déterminée(s) comme propriété.

13. Procédé selon l'une des revendications 1 à 12, dans lequel le procédé de mesure de débit est exécuté par le dispositif de mesure de débit (2) et dans lequel le procédé de mesure de débit utilise de préférence un champ magnétique continu commuté (16) pour la génération des signaux de mesure de débit, une dérive des signaux de mesure de débit est déterminée à l'aide des signaux de mesure de débit et la dérive est compensée dans les signaux d'état.

14. Procédé selon l'une des revendications 1 à 13, dans lequel le signal d'excitation présente une fréquence située entre 10 kHz et 50 kHz, de préférence entre 10 kHz et 20 kHz.

15. Procédé selon l'une des revendications 1 à 14, dans lequel le dispositif de mesure composé (1) présente un affichage (7) et l'endommagement est signalé par l'intermédiaire de l'affichage (7) et/ou le dispositif de mesure composé (1) présente une sortie d'état (8) et l'endommagement est signalé par l'intermédiaire de la sortie d'état (8) et/ou le dispositif de mesure composé (1) présente une interface de bus (9) et l'endommagement est signalé par l'intermédiaire de l'interface de bus (9).

16. Procédé selon l'une des revendications 1 à 15, dans lequel le tube de mesure (4) présente un premier segment et un second segment, dans lequel les électrodes de mesure de débit (13) se trouvent dans le premier segment et les électrodes tomographiques (17) dans le second segment et dans lequel de préférence le premier segment et le second segment sont écartés l'un de l'autre par un segment tubulaire.
